# EUROPÄISCHE PATENTSCHRIFT

(11) **EP 1 279 861 B1**
(45) Veröffentlichungstag und Bekanntmachung des Hinweises auf die Patenterteilung: **24.05.2006**
(21) Anmeldenummer: 02015391.2
(22) Anmeldetag: 11.07.2002
(51) Int. Cl.: F16H 1/16, F16H 57/02, F16H 37/04

(54) **Baukastengetriebe**
Modular gear system
Système modulaire d'engrenage

(30) Priorität: 21.07.2001 DE 10135602
(43) Veröffentlichungstag der Anmeldung: 29.01.2003
(73) Patentinhaber: Getriebebau Nord GmbH & Co. KG, 22941 Bargteheide (DE)
(72) Erfinder: Bouché, Bernhard, 22941 Bargteheide (DE)
(74) Vertreter: Sparing Röhl Henseler Patentanwälte European Patent Attorneys

(56) Entgegenhaltungen:
- EP-A- 0 687 837
- EP-A- 1 045 169
- US-B1- 6 234 037
- PATENT ABSTRACTS OF JAPAN Bd. 2000, Nr. 07, 29. September 2000 (2000-09-29) -& JP 2000 110895 A (SUMITOMO HEAVY IND LTD), 18. April 2000 (2000-04-18)

## Beschreibung

Die Erfindung betrifft ein Baukastengetriebe nach dem Oberbegriff des Anspruchs 1.

Als Kataloggetriebe bezeichnet man Industriegetriebe, die es in sehr vielen Ausführungen bzw. Varianten (Befestigungsarten, Übersetzungen, Baugrößen, Wellenanordnungen etc.) gibt und in meist umfangreichen Katalogen der Hersteller aufgelistet sind. Mit derartigen Kataloggetrieben lassen sich die meisten Aufgabe lösen. Außerdem sind sie im Gegensatz zu speziellen Sondergetrieben schnell lieferbar und auch in kleinen Stückzahlen preiswert.

Um diese große Zahl der Ausführungen bzw. Varianten schnell und preiswert liefern zu können, werden heutzutage Getriebebaukastensystem verwendet, die mit einer geringen Anzahl von Teilen auskommen, die in größeren Losgrößen gefertigt und zwischengelagert werden, um eine hohe Zahl von Ausführungen bzw. Varianten bauen zu können.

So ist aus DE-A-199 17 145 ein Getriebebaukastensystem bekannt, das Stirnradgetriebe und Flachgetriebe verwendet.

Die gattungsbildende DE-C-197 33 546 beschreibt einen Getriebebaukasten aus zwei oder mehr Getriebemodulen gleicher oder unterschiedlicher Bauart, die jeweils eine oder mehrere Getriebegrößen sowie innerhalb einer Größe eine oder mehrere Übersetzungen umfassen und von denen mindestens ein Getriebemodul ein Winkelgetriebe in Form eines Kronenradgetriebes ist, wobei eine Stirnradverzahnung des Elektromotors auch in ein Kronenrad eingreifen kann.

Aufgabe der Erfindung ist es, ein Baukastengetriebe nach dem Oberbegriff des Anspruchs 1 zu schaffen, bei dem eine kostengünstige Montage auch bei kleiner Stückzahl möglich ist.

Diese Aufgabe wird entsprechend dem kennzeichnenden Teil des Anspruchs 1 gelöst.

Hierdurch ergibt sich eine Baukastenbauweise, bei der ein Antriebsmotor mit Hilfe einer Steckkupplung mit der Kupplungsverzahnung einer Schneckenwelle eines Schneckengetriebes in Eingriff gebracht werden kann und wahlweise mindestens ein Stirnradmodul mit einer der Steckkupplung entsprechenden Kupplungsverzahnung direkt am Stirnrad zwischengeschaltet werden kann, geschaffen.

Bei einem derartigen Baukastengetriebe werden vormontierte Module verwendet, die jeweils eine einzelne Übersetzungsstufe bilden. Das Baukastensystem umfaßt dabei mehrere Schneckengetriebe-Baugrößen als Module, deren Schneckenwelle antriebsseitig einen außenverzahnte Kupplungsverzahnung aufweist, in die eine innenverzahnte Kupplungsverzahnung einer Schiebekupplung oder eines Stirnradgetriebemoduls eingreifen kann. Durch diese Zahnkupplung ist eine verspannungsfreie und leicht montier- und demontierbare Verbindung von Motor- und Schneckenwelle verwirklicht. Durch ein Sortiment an Schiebekupplungen und Anbauflanschen ist es möglich, ein fertigmontiertes Schneckengetriebe mit Motoren unterschiedlicher Normen und Baugrößen gegebenenfalls unter Zwischenschaltung eines oder mehrerer Stirnradgetriebemodule zu kombinieren.

Die Stufen von Schneckengetrieben werden üblicherweise mit Übersetzungen von 4 bis 100 gebaut. Reicht diese Übersetzung nicht aus, wird ein entsprechender, vormontierter Stirnradgetriebemodul vorgeschaltet.

Insbesondere ist es aufgrund des modularen Aufbaus zur Reduzierung der Teilevielfalt möglich, für unterschiedliche Schneckengetriebe-Baugrößen gleiche Stirnradvorstufen zu verwenden.

Weitere Ausgestaltungen der Erfindung sind der nachfolgenden Beschreibung und den Unteransprüchen zu entnehmen.

Die Erfindung wird nachstehend anhand eines in der beigefügten Abbildung dargestellten Ausführungsbeispiels näher erläutert.

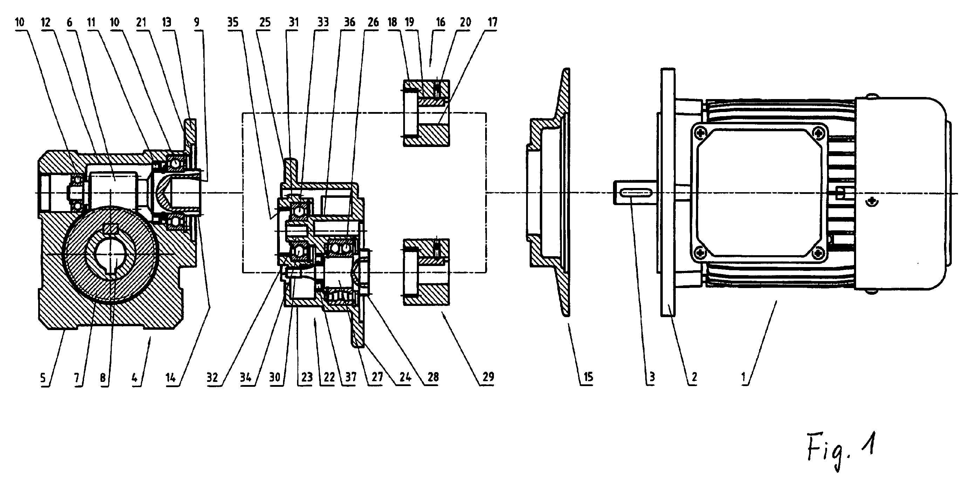

Fig. 1 zeigt ein Baukastengetriebe im Schnitt und auseinandergezogen.

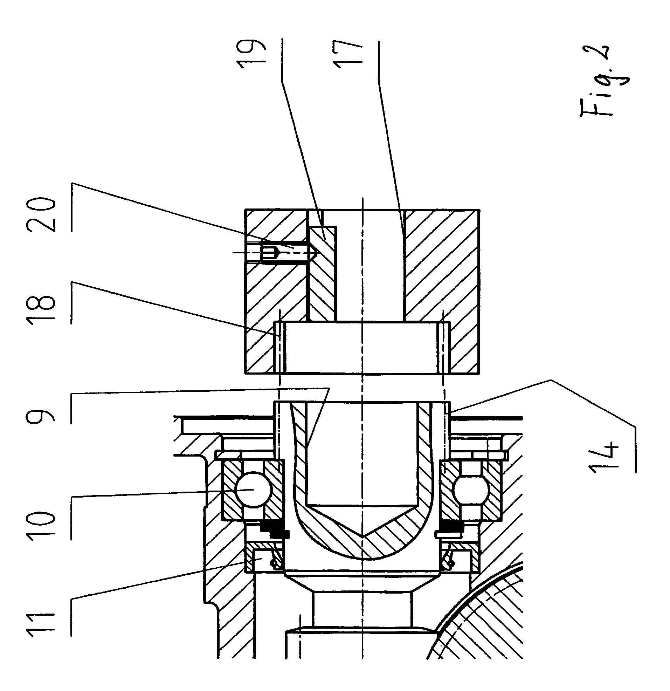

Fig. 2 zeigt einen Ausschnitt aus Fig. 1 vergrößert.

Das dargestellte Baukastengetriebe umfaßt einen Antriebsmodul 1 in Form eines Elektromotors mit einem Aufspannflansch 2 und einer Abtriebswelle 3 sowie einen Schneckengetriebemodul 4. Letzterer umfaßt ein Gehäuse 5, in dem eine eingangsseitige Schneckenwelle 6 gelagert ist, die mit einer ebenfalls in dem Gehäuse 5 gelagerten Schneckenrad 7 kämmt, die eine Abtriebswelle 8 treibt.

Die Schneckenwelle 6 umfaßt an ihren nach außen gewandten Ende einen einstückig damit ausgebildeten hohlen Lagerzapfen 9, der ebenso wie das andere Ende der Schneckenwelle 6 über ein Lager 10 im Gehäuse 5 gelagert ist. Benachbart zu dem den Lagerzapfen 9 lagernden Lager 10 ist eine Wellendichtung 11 zwischen dem Lagerzapfen 9 und dem Gehäuse 5 angeordnet.

Zur Aufnahme der Lager 10 und der Wellendichtung 11 besitzt das Gehäuse 5 eine gestufte Bohrung 12, wobei das Lager 10 für den Lagerzapfen 9 so tief eingesetzt ist, daß ein endseitiger Abschnitt des Lagerzapfens 9, der bezüglich eines antriebsseitigen Gehäuseflansches 13 des Gehäuses 5, in dem die Bohrung 12 mündet, etwas nach außen vorstehen kann. Der endseitige Abschnitt des Lagerzapfens 9 ist außen mit einer Kupplungsverzahnung 14 versehen.

Der Schneckengetriebemodul 4 ist gegebenenfalls unter Zwischenschaltung eines Anbauflansches 15 angepaßt an den zu verwendenden Antriebsmodul 1 und einer hülsenförmigen Steckkupplung 16 an den Antriebsmodul 1 unter Verwendung des Gehäuseflansches 13 und eine Zentrierungsausdrehung 21 der Bohrung 12 anflanschbar.

Die Steckkupplung 16 umfaßt eine gestufte Bohrung 17, die einerseits die Abtriebswelle 3 des Antriebsmoduls 1 aufnimmt und andererseits eine innenverzahnte Kupplungsverzahnung 18 aufweist. Steckkupplung 16 und Abtriebswelle 3 sind über eine Paßfeder 19 und eine Madenschraube 20 verbunden.

Die innenverzahnte Kupplungsverzahnung 18 ist auf die außenverzahnte Kupplungsverzahnung 14 aufschiebbar.

Auf diese Weise läßt sich baukastenartig je nach zu verwendendem Antriebsmodul 1 und Anwendungsfall ein einstufiger Schneckengetriebemotor mit Motordirektanbau oder mit Anbauflansch 15 und Steckkupplung 16 bilden.

Zwischen Antriebsmodul 1 und Schneckengetriebemodul 4 kann aber auch ein Stirnradgetriebemodul 22 zwischengeschaltet werden.

Der Stirnradgetriebemodul 22 umfaßt ein Gehäuse 23 mit an gegenüberliegenden Seiten angeordneten Gehäuseflanschen 24, 25. Im Gehäuse 23 ist über ein zweireihiges Kugellager 26 eine Eingangswelle 27 gelagert und mit einem Wellendichtring 37 gedichtet, wobei die Eingangswelle 27 dem Antriebsmodul 1 zugewandt endseitig eine außenverzahnte Kupplungsverzahnung 28 trägt, die gegebenenfalls über eine Steckkupplung 29 - entsprechend der Steckkupplung 16 - und einen Anbauflansch 16 mit dem Antriebsmodul 1 verbindbar ist, um einen zweistufigen Stirnrad-Schneckengetriebe-Motor mit Anbauflansch 15 und Steckkupplung 29 zu bilden.

Die Eingangswelle 27 ist an dem der Kupplungsverzahnung 28 abgewandten Ende als ein Ritzel 30 ausgebildet, das mit einem abtriebsseitigen Stirnrad 31 des Stirnradgetriebemoduls 22 kämmt. Das Stirnrad 31 ist auf einem Zapfen 32 des Gehäuses 23 über ein Kugellager 33 gelagert, das sich an einer Schulter einer gestuften Axialbohrung 34 des Stirnrads 31 abstützt. Der nach außen gerichtete Abschnitt der Axialbohrung 34 ist mit einer innenverzahnten Kupplungsverzahnung 35 versehen, die auf die außenverzahnte Kupplungsverzahnung 14 der Schneckenwelle 6 schiebbar ist.

Der Zapfen 32 befindet sich stirnseitig an einem nach innen gerichteten Vorsprung 36 des Gehäuses 23.

Man kann auch mehrere Stirnradgetriebemodule 22 z.B. mit unterschiedlicher Übersetzung hintereinanderschalten, wobei dann die innerverzahnte Kupplungsverzahnung 35 des ersten Stirnradgetriebemoduls 22 auf die außenverzahnte Kupplungsverzahnung 28 der Eingangswelle 27 des nachfolgenden Stirnradgetriebemoduls 22 gegebenenfalls unter Zwischenschaltung einer Steckkupplung passen muß.

## Patentansprüche

1. Baukastengetriebe, das mit einem Antriebsmodul (1) mit Abtriebswelle (3) kombinierbar ist und wenigstens ein Schneckengetriebemodul (4) umfaßt, das gegebenenfalls über eine Steckkupplung (16) und einen Zwischenflansch (15) mit der Abtriebswelle (3) koppelbar ist, **dadurch gekennzeichnet, daß** die Schneckenwelle (6) des Schneckengetriebemoduls (4) eine Kupplungsverzahnung (14) aufweist, wobei zwischen Antriebsmodul (1) und Schneckengetriebemodul (4) mindestens ein Stirnradgetriebemodul (22) zwischenschaltbar ist, dessen abtriebsseitiges Stirnrad (31) eine mit der Kupplungsverzahnung (14) der Schneckenwelle (6) in Eingriff bringbare Kupplungsverzahnung (35) aufweist.

2. Baukastengetriebe nach Anspruch 1, **dadurch gekennzeichnet, daß** die Steckkupplung (16) eine innenverzahnte Kupplungsverzahnung (18) aufweist.

3. Baukastengetriebe nach Anspruch 1 oder 2, **dadurch gekennzeichnet, daß** der Stirnradgetriebemodul (22) eine Eingangswelle (27) mit einer außenverzahnten Kupplungsverzahnung (28) aufweist.

4. Baukastengetriebe nach einem der Ansprüche 1 bis 3, **dadurch gekennzeichnet, daß** der Stirnradgetriebemodul (22) eine Eingangswelle (27) mit einem einstückig damit ausgebildeten Ritzel (30) aufweist.

5. Baukastengetriebe nach einem der Ansprüche 1 bis 4, **dadurch gekennzeichnet, daß** der Stirnradgetriebemodul (22) einen Gehäusevorsprung (36) aufweist, auf dem das abtriebsseitige Stirnrad (31) gelagert ist.

6. Baukastengetriebe nach einem der Ansprüche 1 bis 5, **dadurch gekennzeichnet, daß** das Stirnrad (31) eine innenverzahnte Kupplungsverzahnung (35) und die Schneckenwelle (6) eine außenverzahnte Kupplungsverzahnung (14) aufweisen.

## Claims

1. Modular transmission which can be combined with a drive module (1) with an output shaft (3) and comprises at least one worm-gear module (4) which, if appropriate, can be coupled to the output shaft (3) via an insertable clutch (16) and an intermediate flange (15), **characterized in that** the worm shaft (6) of the worm-gear module (4) has a clutch toothing (14), there being capable of being interposed between the drive module (1) and the worm-gear module (4) at least one spur-gear module (22), the output-side spur wheel (31) of which has a clutch toothing (35) capable of being brought into engagement with the clutch toothing (14) of the worm shaft (6).

2. Modular transmission according to Claim 1, **characterized in that** the insertable clutch (16) has an internally toothed clutch toothing (18).

3. Modular transmission according to Claim 1 or 2, **characterized in that** the spur-gear module (22) has an input shaft (27) with an externally toothed clutch toothing (28).

4. Modular transmission according to one of Claims 1 to 3, **characterized in that** the spur-gear module (22) has an input shaft (27) with a pinion (30) produced in one piece with the latter.

5. Modular transmission according to one of Claims 1 to 4, **characterized in that** the spur-gear module (22) has a case projection (36), on which the output-side spur wheel (31) is mounted.

6. Modular transmission according to one of Claims 1 to 5, **characterized in that** the spur wheel (31) has an internally toothed clutch toothing (35) and the worm shaft (6) has an externally toothed clutch toothing (14).

## Revendications

1. Mécanisme modulaire, qui peut être combiné à un module d'entraînement (1) avec un arbre mené (3), et comporte au moins un module d'engrenage à vis sans fin (4), qui peut le cas échéant être couplé à l'aide d'un coupleur à emboîtement (16) et d'une bride intermédiaire (15) à l'arbre mené (3), **caractérisé en ce que** l'arbre de vis (6) du module d'engrenage à vis sans fin (4) présente une denture d'accouplement (14), moyennant quoi, entre le module d'entraînement (1) et le module d'engrenage à vis sans fin (4) peut être intercalé au moins un module d'engrenage droit (22), dont la roue droite du côté sortie (31) présente une denture d'accouplement (35) pouvant être mise en prise avec la denture d'accouplement (14) de l'arbre de vis (6).

2. Mécanisme modulaire selon la revendication 1, **caractérisé en ce que** le coupleur par emboîtement (16) présente une denture d'accouplement dentée à l'intérieur (18).

3. Mécanisme modulaire selon l'une quelconque des revendications 1 ou 2, **caractérisé en ce que** le module d'engrenage droit (22) présente un arbre d'entrée (27) avec une denture d'accouplement dentée à l'extérieur (28).

4. Mécanisme modulaire selon l'une quelconque des revendications 1 à 3, **caractérisé en ce que** le module d'engrenage droit (22) présente un arbre d'entrée (27) et un pignon (30) réalisé d'un seul tenant avec celui-ci.

5. Mécanisme modulaire selon l'une quelconque des revendications1 à 4, **caractérisé en ce que** le module d'engrenage droit (22) présente une partie en saillie de boîtier (36), sur laquelle est disposée la roue droite du côté sortie (31).

6. Mécanisme modulaire selon l'une quelconque des revendications 1 à 5, **caractérisé en ce que** la roue droite (31) présente une denture d'accouplement dentée à l'intérieur (35), et l'arbre de vis (6) comporte une denture d'accouplement dentée à l'extérieur (14).
